# EUROPEAN PATENT SPECIFICATION

(11) **EP 2 511 579 B1**
(45) Date of publication and mention of the grant of the patent: **07.03.2018**
(21) Application number: 11162414.4
(22) Date of filing: 14.04.2011
(51) Int. Cl.: G05D 16/16, F16K 31/383, F16K 37/00, G05D 16/10, A62C 35/68

(54) **Fluid valve**
Fluidventil
Vanne de liquide

(43) Date of publication of application: 17.10.2012
(73) Proprietor: Isomatic A/S, 8900 Randers (DK)
(72) Inventor: Kristoffersen, Soeren, 9560 Hadsund (DK)
(74) Representative: Nestler, Jan Hendrik

(56) References cited:
- EP-A1- 0 769 644
- EP-A1- 2 166 423
- WO-A1-2007/073390
- WO-A1-2012/140457
- US-A- 3 860 073
- US-A1- 2003 102 137
- US-A1- 2006 060 251

## Description

The invention relates to a fluid controlling unit, comprising at least a fluid inlet port, at least a fluid outlet port and at least a fluid regulating means for controllably fluidly connecting said at least one fluid inlet port with said at least one fluid outlet port. The invention further relates to a fluid supply arrangement.

When working with pressurised fluids, it is a standard task to control the flow of fluids according to given requirements. For this, a controlling signal has to be converted into a flow of fluid that is in accordance with the controlling signal. This control can comprise different aspects like opening or closing a fluid connection, controlling the direction of the fluid or bringing the fluid to a specified pressure level. These tasks occur frequently in fluid control, for example in hydraulics and pneumatics.

In particular, when dealing with pressurised gases, the flow of a gas has to be enabled and to be disabled regularly in a lot of applications. As an example, when dealing with pressurised gases that are delivered to some place (or buffered temporarily), pressurised gas bottles are used frequently. The pressure level of such gas bottles is typically around 200 bars or 300 bars (where in special applications higher pressures and/or lower pressures are used as well). Since this is a very widespread application and, furthermore, in typical arrangements quite often a battery of pressurised gas bottles is used, where for safety reasons every gas bottle should have the possibility to be closed individually, a lot of such gas valves have to be used and hence the cost for such gas valves plays a significant role.

Despite of the requirement for low prices, the valves nevertheless have to be reliable and have to be operable easily. Another desired functionality for such fluid valves is that the state they are in (i.e. whether they are opened or closed) can be easily identified, even by an unskilled person.

For achieving these requirements, a variety of different valves has been proposed in the state of the art.

A very well-known valve for pressurised gas bottles is the standard turning knob valve which is attached to pressurised gas bottles. Here, a hand knob is turned manually by an operator either clockwise or counter clockwise to close or to open the gas bottle, respectively. The turning motion is translated into a contact of a valve member onto a valve seat or a lift-off of a valve member away from the valve seat by a thread. While such turning valves are very reliable, comparatively cheap and are interrupting the fluid flow very reliably, they are cumbersome to use. This is because opening and closing of the valve typically needs several turns and hence a comparatively long time. Another problem is that opening and closing of the valve cannot be automated. Yet another problem is that their current status - i.e. whether they are opened or closed - cannot be reliably verified by looking at them.

To be able to open and to close the valve automatically, electrically operated valves have already been suggested in the state of the art. A drawback with such valves is that they are relatively complicated and hence expensive. Furthermore, their current status cannot be easily inspected by simply looking at them. Instead, additional components like bulbs, LEDs, pressure gauges or the like have to be used. Furthermore, electric valves have to be operated electrically by definition. In particular, an additional manual operation in addition to the electrical operation is hard to achieve and hence normally not implemented. Instead, quite often two valves (i.e. a mechanically operated and an electrically operated valve) are usually arranged in series.

In US patent application US 2003/0102137 A1 a container valve for fixed fire extinguishing systems comprising a valve body, a closure piston, one sealed end of which is introduced into the release chamber and the opposite end of which has a sealing surface which can be pressed against the valve seat, is disclosed. A trigger device enables a drop in pressure to be created in the release chamber, in such a way that the closure piston is displaced away from its valve seat, coming to rest against an end stop.

In European patent application EP 0 769 644 A1 a flow valve is disclosed that is operating by pressure differentials and by flow transfer means which regulate small flows of control, and that consists in a rigid valve body with an opening for flow inlet and one opening for flow outlet. The body of the valve has a main cavity between the flow inlet in the flow outlet.

In US patent US 3,860,073 a discharge valve for each of a plurality of manifold connected containers for fire extinguishing fluid is disclosed, the discharge valve including a main valve pressure seated by a fluid in the container to which it is attached and openable by pressure in the valve outlet from the manifold. A combination filling and pilot valve is included so that each container may be separately filled while connected to the manifold.

In post-published international patent application WO 2012/140457 A1, an auxiliary valve controlled self-cleaning main valve with mechanical operating means is disclosed. The valve body of the main valve has an inlet and an outlet interconnected through a flow-through opening, and a movable piston having a main closing element at one of its sides and a break O-ring at its other side. In a control chamber an auxiliary valve with a control valve stem is provided. The mechanical operating means is provided with a wedge travel path and adapted to press the control valve stem when force is applied externally and to keep it pressed in without applying external force, further it is adapted to release it when force is applied externally and to keep it released without applying external force.

There is hence an ongoing demand for a fluid controlling unit that is improved over previously known fluid control units.

Therefore, it is the object of the present invention to provide a fluid controlling unit that is improved over fluid controlling units, known in the state of the art.

The invention solves this object.

Therefore, a fluid controlling unit, comprising at least a fluid inlet port, at least a fluid outlet port and at least a fluid regulating means for controllably fluidly connecting said at least one fluid inlet port with said at least one fluid outlet port is suggested, wherein said fluid controlling unit comprises at least one pilot valve means for controlling said at least one fluid regulating means and at least one connection device for at least one actuation interface device. The at least one actuation interface device is interchangeable. The fluid controlling unit is designed in a way that by reversibly opening and closing said fluid regulating means a fluid connection between said at least one fluid inlet port and said at least one fluid outlet port can be established or interrupted depending on a command signal. Said fluid regulating means is closed by an elevated pressure in a rear side chamber of said fluid regulating means, and a venting of said rear side chamber of said fluid regulating means is performed by said pilot valve means by opening a fluid connection between said rear side chamber and said at least one fluid outlet port. The fluid controlling unit can be used for controlling any type of fluid, in particular it can be used for liquids, gases, mixtures of liquids and gases, hypercritical fluids, including said fluids with a certain amount of solid particles (like smoke and suspensions). The notions "fluid inlet port" and "fluid outlet port" are not necessarily describing the fluid flow situation under all circumstances. As an example, it is possible that the fluid controlling unit (or parts of it) are operated in a reverse direction. Such a reverse flow of the fluid can occur particularly when a gas bottle, to which the fluid controlling unit is attached, has to be filled (where the normal direction of fluid flow is out of the gas bottle). In case that a plurality of fluid inlet ports and/or fluid outlet ports is provided, it is possible that the respective ports are simply connected in parallel (i.e. they operate as some kind of a fluid manifold). However, it is also possible that additional components are arranged between such ports, like directional valves, check valves, manually operated valves, safety valves or the like. As fluid regulating means, essentially all different types of regulating means can be used. In particular, a fluid port that can be reversibly opened and closed can be used as a fluid regulating means. This can be achieved by a valve seat-valve member-arrangement that is as such known in the state of the art. Using a fluid regulating means, a fluid connection between at least one of said fluid inlet ports and at least one of said fluid outlet ports can be established or interrupted depending on a commanding signal (at least in part and/or at least at times). The fluid control can be of any type. In particular it can be a "binary" fluid control, i.e. the fluid controlling unit is either open or closed. Additionally or alternatively, other functionalities can be employed. As an example, a fluid pressure control (in particular for regulating the output pressure of the fluid controlling unit) can be provided. Also, a directional control can be provided by the fluid controlling unit. It is suggested to provide at least one pilot valve means for controlling said at least one fluid regulating means. This way, it is possible to translate a comparatively small and/or weak and/or short commanding signal into a large and/or long actuating force and hence, via the fluid regulating means, into a large and/or long (even quasi-permanent) response of the fluid regulating means and hence of the fluid controlling unit. Furthermore, it is possible to use a particularly wide variety of commanding signals, for example mechanical forces, fluid pressures (hydraulic pressures, gas pressures, pneumatic pressures), electrical pulses and the like.

Preferably, the fluid controlling unit comprises at least one adjustment indicating means. With presently known fluid controlling units (and depending on the actual design of presently known fluid controlling units and the technical environment such presently known fluid controlling units are used for) the current state of the fluid controlling unit is very often not clear for an operator of the arrangement. In particular, it is possible that according to the state-of-the-art additional equipment and/or special operational steps have to be used by the operator to verify the current state. This, of course, is very bothersome and can be even dangerous. By providing an adjustment indicating means, however, it is possible for the operator to check for the current status of the fluid controlling unit by simply looking onto the adjustment indicating means. Preferably, the adjustment indicating means is solely dependent on the current status of the fluid controlling unit in question, and hence not dependent on external parameters like a certain pressure level at the fluid outlet port (which could be influenced by other devices as well). Preferably, as an adjustment indicating means a means is used that is clearly and preferably undoubtedly indicating the current status. Even more preferred, the indication should be at least essentially quasi-binary, in particular when used in combination with an opening/closing valve. I.e. a flag-like indicating means could be employed that is either showing "on" or "off".

Preferably the at least one adjustment indicating means is designed at least in part as a mechanical adjustment indicating means and/or is connected, preferably mechanically connected, at least in part and/or at least at times to at least a part of said at least one pilot valve means. Using a mechanical adjustment indicating means, the indication typically becomes very failsafe. As an example, the indication will usually not suffer from power outages, dead batteries or the like (which could be the case with electrically operating indicating means). Such a mechanical adjustment indicating means can be realised in particular if said indicating means is connected to at least a part of said at least one pilot valve means (although different arrangements can be realised as well). This is because the pilot valve means is typically commanding the state of the fluid controlling unit. Therefore, if the position of the pilot valve means is changed, normally the state of the fluid controlling unit is changed as well; therefore a mechanical connection between the pilot valve means and the adjustment indicating means typically makes sense. However, as already mentioned other designs are possible as well. As an example, a connection (mechanical connection) between the adjustment indicating means and the fluid regulating means of the fluid controlling unit could provide a sensible design as well.

It is preferred that the fluid controlling unit is designed in a way that at least one pilot valve means can be activated, at least in part and/or at least at times, mechanically, fluidly, pneumatically, hydraulically and/or electrically. Such actuation possibilities are widely demanded for different types of technical applications. In particular, a combination of two or more different actuation "energy forms" can be particularly advantageous. As an example, a pneumatically or electrically operated fluid controlling unit that has a manual override functionality can be particularly advantageous.

A further preferred embodiment for the fluid controlling unit can be achieved if said activation of said at least one pilot valve means and/or said at least one fluid regulating means is performed in an essentially binary way. This way, the fluid controlling unit essentially knows only two states, i.e. "fully closed" or "fully opened". Such a behaviour can simplify the actuation signal to be used (presumably simplifying the control unit) and/or can enhance the typically desired output behaviour of the fluid controlling unit.

Preferably, the fluid controlling unit comprises at least one valve biasing means, in particular at least one valve biasing means for biasing at least one of said fluid regulating means and/or for biasing at least one of said pilot valve means. As a biasing means, essentially all types of force storing means can be employed. In particular, springs (in particular helical springs, elastically deformable springs, and/or metal springs) can be employed. Using such biasing means, the respectively biased components can be reproducibly set to a defined starting position, if no external forces are applied. This can enhance the characteristics of the fluid controlling unit. Furthermore, by using an appropriate biasing force, it is also possible to provide certain threshold forces like a minimum actuation force (in particular for the pilot valve means) and/or for a minimum residual pressure at the fluid inlet port (when biasing the fluid regulating means appropriately). Both features can prove to be advantageous.

Even more preferred, the fluid controlling unit comprises at least one fluid bypass means, in particular a fluid bypass means for fluidly bypassing at least one of said fluid regulating means at least in part and/or at least at times. Using such a bypass means, a minimum fluid throughput can be established (at least through parts of the fluid controlling unit), which can be advantageous for some applications. In particular, a bypass can be used for dynamically loading at least parts of the fluid controlling unit, in particular at least one fluid regulating means and/or at least one pilot valve means in a certain way. As an example, such a fluid bypass means can load the rear side of a fluid regulating means (which can be designed as a differential pressure valve plunger) to generate a closing force for said fluid regulating means. The thus pressurised "rear side" chamber can be vented with the aid of the pilot valve means. Since such a venting of this rear side chamber only takes place when the fluid regulating means is open, the fluid passing through the bypass means is typically not negatively affecting the overall fluid controlling behaviour of the fluid controlling unit.

Another preferred embodiment for the fluid controlling unit can be achieved if at least one additional fluid connection is provided, preferably at least one additional fluid connection to said at least one fluid inlet port. In particular, at least one filling means and/or at least one pressure reducing means can be provided this way. Using such an embodiment for the fluid controlling unit, the fluid controlling unit becomes usable more universally. As an example, the fluid controlling unit does not have to be removed from a pressurised gas bottle, if said pressurised gas bottle is to be filled. The pressure reducing means can be used for providing fluid at a comparatively low pressure level, for example for control purposes (like for providing gas pressure for an external control of at least one pilot valve means).

It is further suggested to provide the fluid controlling unit with at least one mechanical user handling device. This way, a direct user input can be made. Such a user intervention is necessary, for example, if a gas bottle has to be changed. The mechanical user handling device can be the only way of operating the fluid controlling unit and/or can be one of several means for actuating the fluid controlling unit. A user handling device can be designed in a way that the operator can operate the fluid controlling unit with "bare hands" (i.e. no tools are needed). However, in certain applications it might be advantageous that a tool is needed to operate the user handling device (at least for allowing the user to operate the handling device).

Yet another preferred embodiment can be achieved if said fluid controlling unit comprises at least one connection device, in particular at least one fast connection device and/or at least one thread device, in particular at least one connection device for said at least one fluid inlet port and/or for said at least one fluid outlet port. By a connection device, it is possible to easily connect and/or disconnect the fluid controlling device to/from a respective external device. As an example, a thread device can be used for the connection of the fluid controlling unit with a pressurised gas bottle. This is particularly advantageous, since pressurised gas bottles typically have threads for the mounting of external components. If the connection devices are interchangeable, the respective connection device (in the presently discussed example a thread) can be easily adapted to different standards (e.g. to American inch standard and/or to metric standard). In particular, for the fluid outlet port and/or for an actuation interface device (connecting directly or indirectly to the at least one pilot valve means) typically fast connecting devices are preferred, which is typically unproblematic since the pressure level is comparatively low at those ports. In particular, fast connection devices can be of a bayonet connection type or a snap fit connecting device. The connection of a connection device cannot only be related to a fluid connection (pneumatic/hydraulic), but also to an electric connection, a mechanical connection or the like.

Preferably, the fluid controlling unit is designed and arranged in a way that it can be used for pressurised gas bottles. This is usually a preferred, if not the standard application for the suggested fluid controlling unit.

Even more, it is suggested to design and arrange the fluid controlling unit in a way that a minimum pressure will be sustained for at least one of said fluid inlet ports. This is very advantageous in the case of pressurised gas bottles, since usually a gas bottle has to be extensively cleaned, if it runs down to ambient pressure (in this case, contaminations can enter the gas bottle). Therefore, typically a minimum pressure level of 2 bars, 2.5 bars, 3 bars, 3.5 bars, 4 bars, 4.5 bars or 5 bars should remain within the pressurised gas bottle, so that no such contamination will take place.

Furthermore, a fluid supply arrangement is suggested, wherein said fluid supply arrangement comprises at least one, preferably a plurality of fluid controlling units according to the previous description. As an example, such a fluid supply arrangement could comprise a plurality (stack) of pressurised gas bottles. Using fluid controlling units for (essentially) each pressurised gas bottle, the respective gas bottle can be connected to and disconnected from a pressure manifold individually. This can be advantageous for maintenance and even essential for safety considerations.

Preferably, the fluid supply arrangement should be designed in a way that a common actuating means for actuating at least one of said pilot valve means, preferably for actuating at least a plurality of said pilot valve means, more preferred for actuating essentially all pilot valve means should be used. As an example, this way all (or at least a set) of pressurised gas bottles can be switched on and off according to a common actuation signal. Nevertheless it is preferred if each of the fluid controlling units has some kind of a manual override. Such a manual override can be done by an additional (mechanical) user handling device or by simply disconnecting the connection (i.e. in case of a pneumatical actuation signal by disconnecting a self locking fast gas connector) or - in case of an electric actuation signal - by simply pulling off the plug/socket).

A preferred example for a fluid supply arrangement is a fire extinguishing system. Here, it is usually required to open a plurality (or even essentially all) of a stack of pressurised gas bottles (often referred to as a "battery of gas bottles") at essentially the same time. The thus released fire extinguishing gas is led to a room, where a fire is present (or at least thought to be present). This "triggering" of the fire extinguishing gas bottles is preferably done by a single, common release signal.

The present invention and its advantages will become more apparent, when looking at the following description of possible embodiments of the invention, which will be described with reference to the accompanying figures, which are showing:
- Fig. 1:: a first possible embodiment of a valve in a schematic cross-section;
- Fig. 2:: detailed views of certain components of the valve, shown in Fig. 1;
- Fig. 3:: a second possible embodiment of a valve in a schematic cross-section;
- Fig. 4:: actuating devices, usable for the valve, shown in Fig. 3.
- Fig. 5:: a third possible embodiment of a valve member in a schematic cross-section.

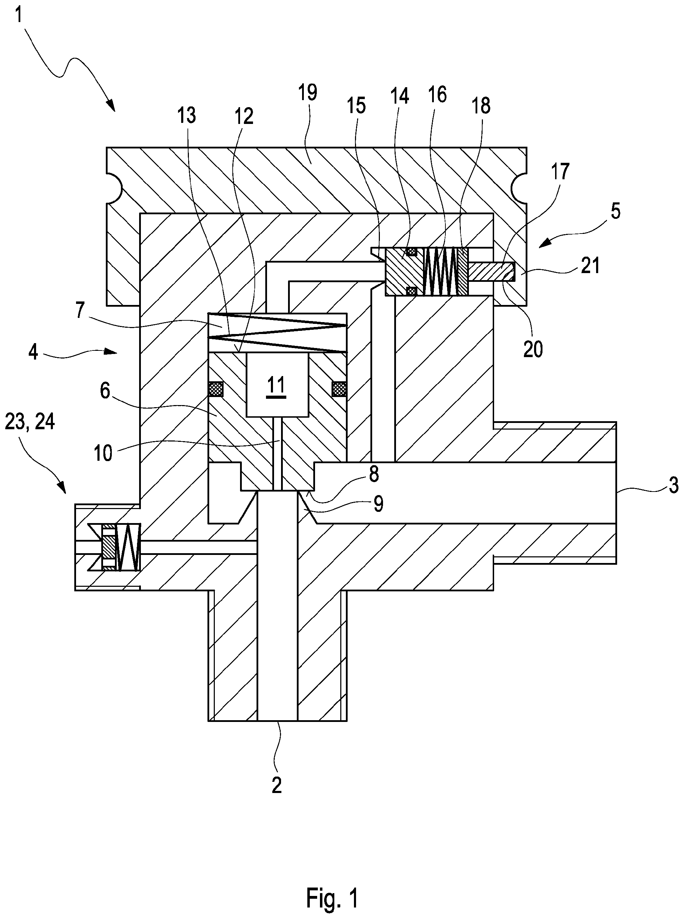

In Fig. 1 a possible embodiment for a valve 1 for a pressurised gas bottle (not shown) is depicted in a schematic cross-section. The valve 1 comprises a main fluid inlet port 2 that can be connected to a pressurised gas bottle, for example. Furthermore, the valve 1 comprises a main fluid outlet port 3, that can be connected to a pressurised gas supply line (not shown), for example.

The valve 1 comprises a main valve part 4 and an additional pilot valve part 5. The main valve part 4 is not directly actuated by an operator or an actuating signal, but indirectly operated by the pilot valve part 5. The pilot valve part 5, however, is operated by an operator and/or by an actuating signal. Thanks to this "two-step approach" the actuating forces are typically significantly lowered, which is an advantage.

The main valve part 4 comprises a differential pressure piston 6 that is slidingly arranged in a cavity 7. In Fig. 1, the differential pressure piston 6 is shown in its lower position, where its respective front face 8 is in contact with the valve seat 9. Thus, no direct fluid connection exists between main fluid inlet port 2 and main fluid outlet port 3.

However, in the differential pressure piston 6, a small orifice 10 (for example a thin bore; presumably including a throttling device or the like) is arranged. Therefore, a small quantity of fluid is allowed to pass from the main fluid inlet port 2 to the rear side chamber 11 (defined by the cavity 7 and the differential pressure piston 6) through the orifice 10. Due to this influx of gas into the rear side chamber 11, the rear side chamber 11 will eventually be pressurised to the pressure level at the front face 8. Since the combined area of the rear faces 12 of the differential pressure piston 6 is larger as compared to the front face 8, a net downward force that is directed to the main fluid inlet port 2 is present. This force is pushing the differential pressure piston 6 onto the valve seat 9, thus closing the fluid connection between main fluid inlet port 2 and main fluid outlet port 3. This closing movement can be supported by a biasing spring 13 that is arranged in the rear side chamber 11. Furthermore, the biasing spring 13 can be dimensioned in a way that the valve 1 will close once the pressure in the main fluid inlet port 2 is at or below a certain target value (for example 3 bars).

The closed position of the differential pressure piston 6, as depicted in Fig. 1, depends on an elevated pressure within the rear side chamber 11 of the differential pressure piston 6 (at least under normal working conditions). Such an elevated pressure within the rear side chamber 11 requires a closed pilot valve part 5. Consequently, the pilot valve part 5 is shown in its closed position in Fig. 1. I.e., the pilot piston 14 engages the pilot valve seat 15, thus closing the fluid connection between the rear side chamber 11 and the main fluid outlet port 3.

For making the differential pressure piston 6 and the pilot piston 14 gas tight (i.e. for inhibiting a gas flow through the thin gap between the respective piston 6, 14 and the chamber the piston is placed in), an O-ring track with an O-ring placed inside is formed for the differential pressure piston 6 and the pilot piston 14. This is indicated in the Figs.

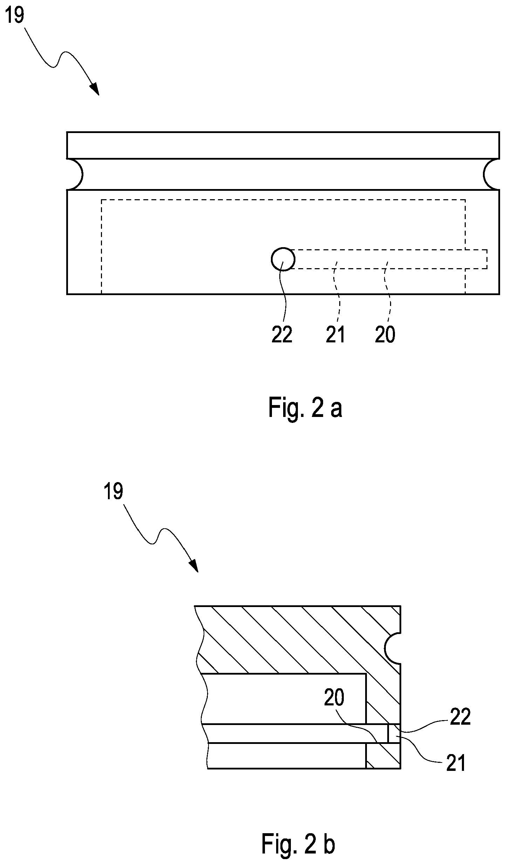

The pilot piston 14 is held in its closed state by a deformable spring 16. The first side of the deformable spring 16 contacts the rear side of the pilot piston 14 (at least in the closed state of the pilot valve part 5), while the second side of the deformable spring 16 engages a supporting plate 18 that is attached to a movable pin 17. In the closed state of the pilot valve part 5, the movable pin 17 is moved to the left (as indicated in Fig. 1), thus loading the deformable spring 16 and pressing the pilot piston 14 towards the pilot valve seat 15. The movable pin 17 itself is held in position by a rotary knob 19. The rotary knob 19 has an elongated groove 20, in which the movable pin 17 is slidingly engaged. A movement of the movable pin 17 to the right is usually inhibited by the bottom wall 21 of the groove 20 (see also Fig. 2a and Fig. 2b; where Fig. 2a shows a view onto the rotary knob 19 from the side and Fig. 2b shows a detail of the rotary knob 19 in a schematic cross-section). However, at one side of the groove 20, a through-hole 22 is provided. The through-hole 22 has a dimension so that the movable pin 17 may snugly fit into the through-hole 22. Therefore, if the rotary knob 19 is turned into an appropriate position, the movable pin 17 will snap into the through-hole 22 (therefore moving to the right), the deformable spring 16 will be unloaded and hence the pilot piston 14 will move away from the pilot valve seat 15, thus opening the pilot valve part 5. This again will cause the pressure in the rear side chamber 11 to drop to the pressure level of the main fluid outlet port 3. If sufficient pressure is present in the main fluid inlet port 2, the force exerted on the front surface 8 will become larger than the combined forces of the biasing spring 13 and the (residual) gas pressure forces on the rear side faces 12 of the differential pressure piston 6. Therefore, the differential pressure piston 6 will move upwards, thus opening the main valve part 4. Therefore, the valve 1 is open. (Strictly speaking, the resulting net force, induced by the pressure at the front surface 8, the pressure in the rear side chamber 11 and the force applied by the deformable spring 16, will usually change its direction at a somewhat elevated gas pressure (as compared to ambient gas pressure) in the rear side chamber 11.)

If the valve 1 has to be closed again, the rotary knob 19 will be turned by an operator, causing the movable pin 17 to move to the left, thus biasing the deformable spring 16 and therefore closing the pilot valve part 5. Now, the fluid passing through orifice 10 will lead to a pressure build-up in the rear side chamber 11 and will eventually cause the differential pressure piston 6 to move downward. Therefore, the main valve part 4 will be closed as well.

In some designs, it might be necessary to first push down the movable pin 17. This can actually be an advantage, since it discourages an unwanted closing of the valve 1.

It is to be noted that the differential pressure piston 6 will not move upwards, if the pressure in the main fluid inlet port 2 is below a certain pressure (for example 3 bars). Now, the biasing force of a biasing spring 13 will prevail the force, exerted to the front face 8 of the differential pressure piston 6, even if the rear side chamber 11 is depressurised.

It should be further recognised that the orifice 10 will usually not lead to any adverse leakage. If the valve 1 is in its closed position, no fluid flow is allowed through pilot valve part 5, so that orifice 10 will not lead to an "active" leak. If, however, the valve 1 is open, the orifice 10 is irrelevant as well, since a fluid connection is present between main fluid inlet port 2 and main fluid outlet port 3 anyhow.

Another advantage of the presently shown design with a movable pin 17 is that the movable pin 17 can show a clear indication of whether valve 1 is open or not. In particular, movable pin 17 can be designed with a signalling colour (for example yellow, red or orange). If the movable pin 17 can be seen in the through-hole 22, the valve 1 is open. If, on the contrary, movable pin 17 cannot be seen in the through-hole 22, valve 1 is closed.

Of course, it is possible that the movable pin 17 is used for triggering additional actions. For example, the movable pin 17 might close an electric contact that can be used for switching on a controlling LED (near the valve 1 and/or at a remote place). This way, an additional clear indication of the state of the valve 1 can be provided.

As an additional feature the presently suggested valve 1 shows a check valve 23 that is connected to the main fluid inlet port 2. This check valve 23 can be used as a filling port 24 for a pressurised gas bottle. With this design, it is not necessary to remove the valve 1 from the gas bottle before filling.

It should be mentioned that the design of the presently described rotary knob 19 and/or the process of the actuation of the movable pin 17 is only given as a possible example. Different designs of the handle 19 and/or different actuation processes of the movable pin 17 are possible as well. For example, the rotary knob 19 could be designed differently and/or could be placed at some other part of the valve 1. Furthermore, a different type of hole and/or a missing part of a rotary knob 19 could be used to release the movable pin 17/the pilot valve 5. Also, the movable pin 17 could be arranged at a different place as well. As an example, the movable pin 17 could be placed near the top of the rotary knob 19.

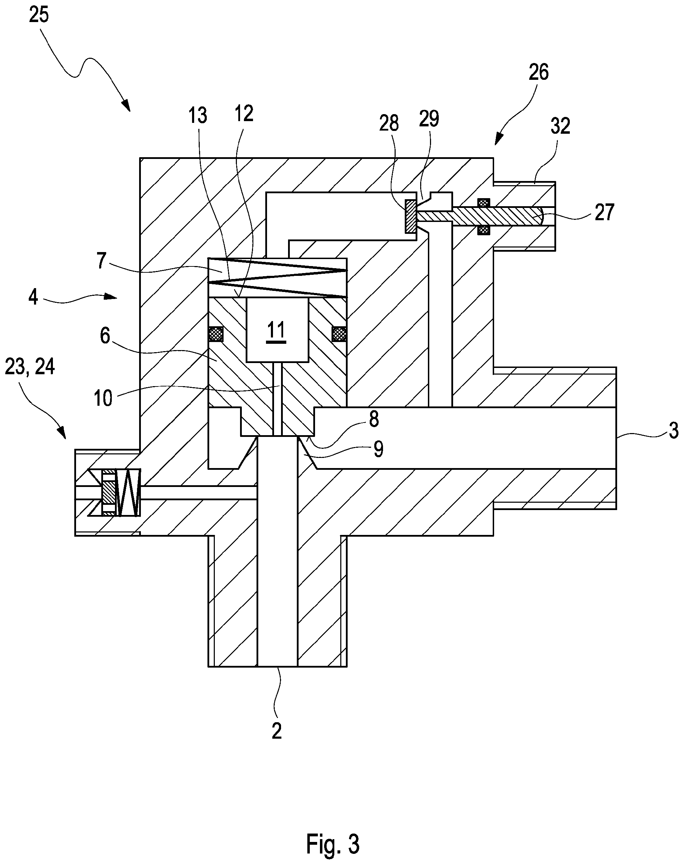

In Fig. 3 a second possible embodiment of a valve 25 is shown in a schematic cross-section. Major parts of the second embodiment of a valve 25 are similar to those of the first embodiment of a valve 1, shown in Fig. 1. For brevity, similar parts and features will not be discussed a second time. The essential difference between both embodiments of valves 1, 25 is the design of the pilot valve part 26. Presently (according to Fig. 3) the pilot valve part 26 is designed as an upstream valve, so that an active force is needed to open the pilot valve part 26 (as supposed to the release of a force, as with pilot valve part 5).

Therefore, if a force is exerted to the movable pilot valve stem 27 of the pilot valve part 26, the pilot valve member 28 will be lifted off its pilot valve seat 29, thus opening a fluid connection between rear side chamber 11 and main fluid outlet port 3. If the pressure on the pilot valve stem 27 is released again, the pilot valve member 28 will contact the pilot valve seat 29, thus closing the pilot valve part 26 again. This will have the already described effects on the state of the main valve part 4 and consequently of the complete valve 25.

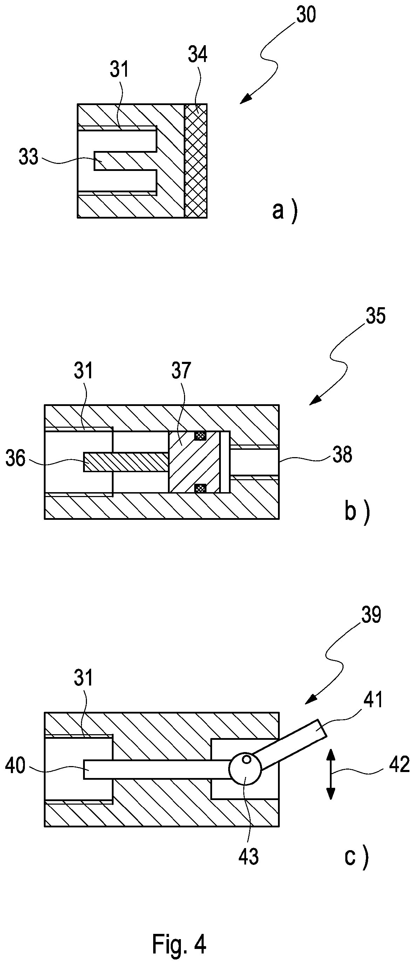

In Fig. 4, different possible means for actuating the pilot valve stem 27 (and hence the pilot valve part 26) of the second embodiment of a valve 25, as shown in Fig. 3, are shown.

In Fig. 4a, an end cap 30 is shown. This end cap 30 can be provided with an inner thread 31, so that it can be screwed onto an outer thread 32 of the pilot valve part 26. A pin-like protrusion 33 inside of end cap 30 will push down the pilot valve stem 27, thus opening the pilot valve part 26. The current state of the valve 25 (i.e. whether valve 25 is open or closed) can be easily identified by the presence or absence of an end cap 30. This visibility can be enhanced by providing a signal colour on the cap face 34 of the end cap 30.

Another type of end cap 35 is shown in Fig. 4b. Here, the end cap 35 comprises an actuatable pin 36. In the presently shown example, the actuatable pin 36 can be activated by a piston-like structure 37, so that the movement of the actuatable pin 36 can be initiated by applying a pneumatical or hydraulical pressure. For applying such a pressure, a pressurisation port 38 is provided. The pressurisation port 38 can be provided with a thread and/or with a fast locking (preferably a removable fast locking) connection.

A particular advantage of the end cap 35, shown Fig. 4b (and presumably of other designs as well) is that the actuation lines can be detached from the pressurisation port 38 (in particular in case of a fast locking mechanism), providing an easy way to test the functionality of an actuation arrangement/an actuation manifold/actuation hoses (in particular for the absence of leaks), without discharging the gas bottles. Once this functionality check has been done, the actuation hoses are connected back to the pressurisation port 38, and the system (for example a fire extinguishing system) is operable (again).

Yet another type of end cap 39 is shown in Fig. 4c. Here, the actuatable pin 40 is actuated by a manual rocking switch 41. The up-and-down movement 42 of the manual rocking switch 41 is translated into a back and forth movement of the actuatable pin 40 by an appropriate mechanism 43 (for example an eccentric).

It should be noted that it is easy to exchange all different types of end caps 30, 35, 39, shown in Fig. 4. Even more different types of end caps can be used and exchanged as well.

As another possible embodiment of an end cap (not shown), an electrically actuated end cap should be mentioned, where an electric signal will be translated into a back-and-forth movement of an actuatable pin (which can be performed, as an example, by a yoke-like actuatable pin that is actuated by an electric coil that is supplied with the electric signal. In this embodiment, the electric actuation wires can be detached from the end cap (for example by removing an electric connection in form of an electric plug) providing a possible functionality check similar to the end cap 35 of Fig. 4b.

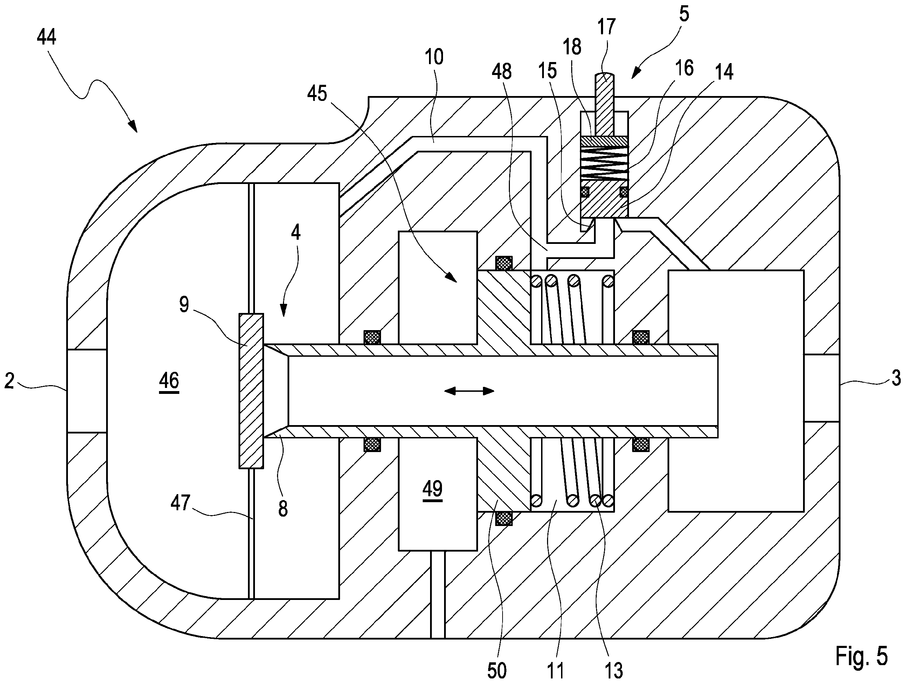

In Fig. 5, finally, even another possible embodiment of a valve 44 is depicted. Although the basic functionality of the presently shown valve 44 and the previously described valves 1, 25 (in particular of the first embodiment of the valve 1, shown in Fig. 1) the exact design is different. In particular, the valve 44 is of an elongated design, so that the fluid will pass linearly through the valve 44, without a bend (like the bend of 90° in valve 1) between main fluid inlet port 2 and main fluid outlet port 3. This arrangement is typically better suited for pressurised gas applications due to the elongated natures of the pressurised gas bottles. Furthermore, with a design according to valve 44, pressure losses of the gas flowing through the valve 44 can typically be minimised.

To avoid unnecessary repetitions, the parts of valve 44 that are similar in function to the respective parts of valve 1 and/or valve 25 are indicated with the same reference numbers, although the design and/or the arrangement of the respective parts can be somewhat different.

In particular, the valve member 45 of the valve 44 is designed as a tube-like valve member 45. Its front surface 8 is designed as a kind of ring-shaped blade-like structure. The valve seat 9 is designed as a plate-like structure that is held in place within the entrance cavity 46 by holding bars 47. The orifice 10 is arranged to fluidly bridge the entrance cavity 46 (and hence the main fluid inlet port 2 with the rear side chamber 11. From here, the fluid passage 48 to the pilot valve part 5 branches off.

As an additional component, a vented chamber 49 is used for the front surface of the collar part 50 of the tube-like valve member 45.

For simplifying Fig. 5, no actuation handle for the actuation pin 17 is drawn. However, some kind of a circumferential rotary knob with a groove 20 and a through-hole 22 similar in design to the rotary knob 19 of valve 1, shown in Fig. 1 can be used for the presently shown valve 44 as well.

Also, it is possible to design the pilot valve part 5 of valve 44 similar to the upstream-type pilot valve part 26 of valve 25, shown in Fig. 3. When such an embodiment is used, it is possible to use similar or even the same end caps 30, 35, 39, as shown in Fig. 4 and/or as described in this context.

Furthermore, the fluid inlet port 2 and/or the fluid outlet port 3 of the presently shown valve 44 can be provided with an inner thread (not shown in the drawing). This inner thread can be of an "universal design", which is not adopted to different thread standards in different countries. However, these inner threads can be used for receiving threaded tubes, where the tubes are adapted to the individual thread standards in different countries. This way, a globally usable valve 44 can be provided very easily.

### Reference list:

| | | | |
|---|---|---|---|
| 1. | Valve | 26. | Pilot valve part |
| 2. | Main fluid inlet port | 27. | Pilot valve stem |
| 3. | Main fluid outlet port | 28. | Pilot valve member |
| 4. | Main valve part | 29. | Pilot valve seat |
| 5. | Pilot valve part | 30. | End cap |
| 6. | Differential pressure piston | 31. | Inner thread |
| 7. | Cavity | 32. | Outer thread |
| 8. | Front face | 33. | Pin-like protrusion |
| 9. | Valve seat | 34. | Cap face |
| 10. | Orifice | 35. | End cap |
| 11. | Rear side chamber | 36. | Actuatable pin |
| 12. | Rear face | 37. | Piston-like structure |
| 13. | Biasing spring | 38. | Pressurisation port |
| 14. | Pilot piston | 39. | End cap |
| 15. | Pilot valve seat | 40. | Actuatable pin |
| 16. | Deformable spring | 41. | Manual rocking switch |
| 17. | Movable pin | 42. | Up-and-down movement |
| 18. | Supporting plate | 43. | Mechanism |
| 19. | Rotary knob | 44. | Valve |
| 20. | Groove | 45. | Valve member |
| 21. | bottom wall | 46. | Entrance cavity |
| 22. | Through-hole | 47. | Holding bar |
| 23. | Check valve | 48. | Fluid passages |
| 24. | Filling port | 49. | Vented chamber |
| 25. | Valve | 50. | Collar |

## Claims

1. Fluid controlling unit (1, 25, 44), comprising at least a fluid inlet port (2), at least a fluid outlet port (3) and at least a fluid regulating means (4) for controllably fluidly connecting said at least one fluid inlet port (2) with said at least one fluid outlet port (3), further comprising at least one pilot valve means (5, 26) for controlling said at least one fluid regulating means (4) and at least one connection device (2, 3, 24, 31, 32, 38) for at least one actuation interface device (31, 32, 38), where said at least one actuation interface device (31, 32, 38) is interchangeable, **characterised in that** the fluid controlling unit is designed in a way that by reversibly opening and closing said fluid regulating means (4) a fluid connection between said at least one fluid inlet port (2) and said at least one fluid outlet port (3) can be established or interrupted depending on a command signal, wherein said fluid regulating means (4) is closed by an elevated pressure in a rear side chamber (11) of said fluid regulating means (4), and a venting of said rear side chamber (11) of said fluid regulating means (4) is performed by said pilot valve means (5, 26) by opening a fluid connection between said rear side chamber (11) and said at least one fluid outlet port (3).

2. Fluid controlling unit (1, 25, 44) according to claim 1, **characterised in that** said at least one connection device (2, 3, 24, 31, 32, 38) for said at least one actuation interface device (31, 32, 38), is designed as at least one fast connection device (38) and/or as at least one thread device (31, 32).

3. Fluid controlling unit (1, 25, 44) according to claim 1 or 2, **characterised by** at least one adjustment indicating means (17, 34, 41).

4. Fluid controlling unit (1, 25, 44) according to claim 3, **characterised in that** said at least one adjustment indicating means (17, 34, 41) is designed at least in part as a mechanical adjustment indicating means (17, 34, 41) and/or is connected, preferably mechanically connected, at least in part and/or at least at times, to at least a part of said at least one pilot valve means (5, 26).

5. Fluid controlling unit (1, 25, 44) according to any of the preceding claims, **characterised in that** said at least one pilot valve means (5, 26) can be actuated, at least in part and/or at least at times, mechanically, fluidly, pneumatically, hydraulically and/or electrically.

6. Fluid controlling unit (1, 25, 44) according to any of the preceding claims, in particular according to claim 5, **characterised in that** said activation of said at least one pilot valve means (5, 26) and/or said at least one fluid regulating means (4) is performed in an essentially binary way.

7. Fluid controlling unit (1, 25, 44) according to any of the preceding claims, **characterised by** at least one valve biasing means (13, 16), in particular at least one valve biasing means (13, 16) for biasing at least one of said fluid regulating means (4) and/or for biasing at least one of said pilot valve means (5, 26).

8. Fluid controlling unit (1, 25, 44) according to any of the preceding claims, **characterised by** at least one fluid bypass means (10), in particular for fluidly bypassing at least one of said fluid regulating means (4) at least in part and/or at least at times.

9. Fluid controlling unit (1, 25, 44) according to any of the preceding claims, **characterised by** at least one additional fluid connection (24), preferably to said at least one fluid inlet port (2), in particular by at least one filling means (24) and/or by at least one pressure reducing means.

10. Fluid controlling unit (1, 25, 44) according to any of the preceding claims, **characterised by** at least one mechanical user handling device (19, 30, 41).

11. Fluid controlling unit (1, 25, 44) according to any of the preceding claims, comprising at least one connection device (2, 3, 24, 31, 32, 38), in particular at least one fast connection device (38) and/or at least one thread device (31, 32), in particular at least one connection device for said at least one fluid inlet port (2) and/or said at least one fluid outlet port (3), wherein said at least one connection device is preferably interchangeable.

12. Fluid controlling unit (1, 25, 44) according to any of the preceding claims, **characterised in that** it is designed and arranged in a way that it can be used for pressurised gas bottles.

13. Fluid controlling unit (1, 25, 44) according to any of the preceding claims, **characterised in that** it is designed and arranged in a way that a minimum pressure will be sustained for at least one of said fluid inlet ports (2).

14. Fluid supply arrangement, **characterised by** at least one, preferably by a plurality of fluid controlling units (1, 25, 44) according to any of claims 1 to 13.

15. Fluid supply arrangement according to claim 14, **characterised by** a common actuating means (30, 35, 39) for actuating at least one of said pilot valve means (5, 26), preferably for actuating at least a plurality of said pilot valve means (5, 26), more preferred for actuating essentially all pilot valve means (5, 26).

## Patentansprüche

1. Fluid-Regelungseinheit (1, 25, 44) umfassend: mindestens eine Fluid-Einlassöffnung (2), mindestens eine Fluid-Auslassöffnung (3) und mindestens ein Fluid-Regulierungsmittel (4) zur fluidtechnisch regelbaren Verbindung der mindestens einen Fluid-Einlassöffnung (2) mit der mindestens einen Fluid-Auslassöffnung (3), ferner umfassend: mindestens ein Pilotventilmittel (5, 26) zum Vorsteuern mindestens eines Fluid-Regulierungsmittels (4) und mindestens eine Verbindungsvorrichtung (2, 3, 24, 31, 32, 38) für mindestens eine Betätigungsschnittstellenvorrichtung (31, 32, 38), wobei die mindestens eine Betätigungsschnittstellenvorrichtung (31, 32, 38) austauschbar ist, **dadurch gekennzeichnet, dass** die Fluid-Regelungseinheit so ausgelegt ist, dass durch das umkehrbare Öffnen und Schließen des Fluid-Regulierungsmittels (4) eine Fluidverbindung zwischen der mindestens einen Fluid-Einlassöffnung (2) und der mindestens einen Fluid-Auslassöffnung (3) in Abhängigkeit von einem Befehlssignal hergestellt oder unterbrochen werden kann, wobei das Fluid-Regulierungsmittel (4) durch einen erhöhten Druck in einer rückseitigen Kammer (11) des Fluid-Regulierungsmittels (4) geschlossen wird und durch Öffnen einer Fluidverbindung zwischen der rückseitigen Kammer (11) und der mindestens einen Fluid-Auslassöffnung (3) eine Entlüftung der rückseitigen Kammer (11) des Fluid-Regulierungsmittels (4) durch die Pilotventilmittel (5, 26) ausgeführt wird.

2. Fluid-Regelungseinheit (1, 25, 44) nach Anspruch 1, **dadurch gekennzeichnet, dass** die mindestens eine Verbindungsvorrichtung (2, 3, 24, 31, 32, 38) für die mindestens eine Betätigungsschnittstellenvorrichtung (31, 32, 38) als mindestens eine Schnellverbindungsvorrichtung (38) und/oder als mindestens eine Gewindevorrichtung (31, 32) gestaltet ist.

3. Fluid-Regelungseinheit (1, 25, 44) nach Anspruch 1 oder 2, **gekennzeichnet durch** mindestens ein Verstellungsanzeigemittel (17, 34, 41).

4. Fluid-Regelungseinheit (1, 25, 44) nach Anspruch 3, **dadurch gekennzeichnet, dass** das mindestens eine Verstellungsanzeigemittel (17, 34, 41) zumindest teilweise als ein mechanisches Verstellungsanzeigemittel (17, 34, 41) gestaltet ist und/oder, zumindest teilweise und/oder zumindest zeitweise, mit mindestens einem Teil des mindestens einen Pilotventilmittels (5, 26) verbunden, vorzugsweise mechanisch verbunden, ist.

5. Fluid-Regelungseinheit (1, 25, 44) nach einem der vorhergehenden Ansprüche, **dadurch gekennzeichnet, dass** das mindestens eine Pilotventilmittel (5, 26), zumindest teilweise und/oder zumindest zeitweise, mechanisch, fluidisch, pneumatisch, hydraulisch und/oder elektrisch betätigt werden kann.

6. Fluid-Regelungseinheit (1, 25, 44) nach einem der vorhergehenden Ansprüche, insbesondere nach Anspruch 5, **dadurch gekennzeichnet, dass** die Aktivierung des mindestens einen Pilotventilmittels (5, 26) und/oder des mindestens einen Fluid-Regulierungsmittels (4) auf eine im Wesentlichen binäre Weise erfolgt.

7. Fluid-Regelungseinheit (1, 25, 44) nach einem der vorhergehenden Ansprüche, **gekennzeichnet durch** mindestens ein Ventilvorspannmittel (13, 16), insbesondere mindestens ein Ventilvorspannmittel (13, 16) zum Vorspannen von mindestens einem der Fluid-Regulierungsmittel (4) und/oder zum Vorspannen von mindestens einem der Pilotventilmittel (5, 26).

8. Fluid-Regelungseinheit (1, 25, 44) nach einem der vorhergehenden Ansprüche, **gekennzeichnet durch** mindestens ein Fluid-Bypassventil (10), insbesondere um mindestens eines der Fluid-Regulierungsmittel (4) zumindest teilweise und/oder zumindest zeitweise fluidtechnisch zu umgehen.

9. Fluid-Regelungseinheit (1, 25, 44) nach einem der vorhergehenden Ansprüche, **gekennzeichnet durch** mindestens eine zusätzliche Fluidverbindung (24), vorzugsweise mit der mindestens einen Fluid-Einlassöffnung (2), insbesondere durch mindestens ein Befüllungsmittel (24) und/oder durch mindestens ein Druckreduziermittel.

10. Fluid-Regelungseinheit (1, 25, 44) nach einem der vorhergehenden Ansprüche, **gekennzeichnet durch** mindestens eine mechanische Benutzerhandhabungsvorrichtung (19, 30, 41).

11. Fluid-Regelungseinheit (1, 25, 44) nach einem der vorhergehenden Ansprüche, umfassend: mindestens eine Verbindungsvorrichtung (2, 3, 24, 31, 32, 38), insbesondere mindestens eine Schnellverbindungsvorrichtung (38) und/oder mindestens eine Gewindevorrichtung (31, 32), insbesondere mindestens eine Verbindungsvorrichtung für die mindestens eine Fluid-Einlassöffnung (2) und/oder die mindestens eine Fluid-Auslassöffnung (3), wobei die mindestens eine Verbindungsvorrichtung vorzugsweise austauschbar ist.

12. Fluid-Regelungseinheit (1, 25, 44) nach einem der vorhergehenden Ansprüche, **dadurch gekennzeichnet, dass** sie so gestaltet und angeordnet ist, dass sie für Druckgasflaschen verwendet werden kann.

13. Fluid-Regelungseinheit (1, 25, 44) nach einem der vorhergehenden Ansprüche, **dadurch gekennzeichnet, dass** sie so gestaltet und angeordnet ist, dass für mindestens eine der Fluid-Einlassöffnungen (2) ein Mindestdruck aufrechterhalten wird.

14. Fluid-Versorgungseinrichtung, **gekennzeichnet durch** mindestens eine, vorzugsweise mehrere Fluid-Regelungseinheiten (1, 25, 44) nach einem der Ansprüche 1 bis 13.

15. Fluid-Versorgungseinrichtung nach Anspruch 14, **gekennzeichnet durch** ein gemeinsames Betätigungsmittel (30, 35, 39) zum Betätigen von mindestens einem der Pilotventilmittel (5, 26), bevorzugt zum Betätigen von mindestens mehreren der Pilotventilmittel (5, 26), bevorzugter zum Betätigen von im Wesentlichen allen Pilotventilmitteln (5, 26).

## Revendications

1. Unité de commande de fluide (1, 25, 44), comprenant au moins un port d'entrée de fluide (2), au moins un port de sortie de fluide (3) et au moins un moyen de régulation de fluide (4) pour connecter fluidiquement de façon commandable ledit au moins un port d'entrée de fluide (2) audit au moins un port de sortie de fluide (3), comprenant en outre au moins un moyen de vanne pilote (5, 26) pour commander ledit au moins un moyen de régulation de fluide (4) et au moins un dispositif de connexion (2, 3, 24, 31, 32, 38) pour au moins un dispositif d'interface d'actionnement (31, 32, 38), où ledit au moins un dispositif d'interface d'actionnement (31, 32, 38) est interchangeable, **caractérisée en ce que** l'unité de commande de fluide est conçue de telle manière qu'en ouvrant et en fermant de façon réversible ledit moyen de régulation de fluide (4), une connexion fluidique entre ledit au moins un port d'entrée de fluide (2) et ledit au moins un port de sortie de fluide (3) puisse être établie ou interrompue en fonction d'un signal de commande, dans laquelle ledit moyen de régulation de fluide (4) est fermé par une pression élevée dans une chambre latérale arrière (11) dudit moyen de régulation de fluide (4), et une évacuation de ladite chambre latérale arrière (11) dudit moyen de régulation de fluide (4) est exécutée par ledit moyen de vanne pilote (5, 26) en ouvrant une connexion fluidique entre ladite chambre latérale arrière (11) et ledit au moins un port de sortie de fluide (3).

2. Unité de commande de fluide (1, 25, 44) selon la revendication 1, **caractérisée en ce que** ledit au moins un dispositif de connexion (2, 3, 24, 31, 32, 38) pour ledit au moins un dispositif d'interface d'actionnement (31, 32, 38) est conçu comme au moins un dispositif de connexion rapide (38) et/ou comme au moins un dispositif à filet (31, 32).

3. Unité de commande de fluide (1, 25, 44) selon la revendication 1 ou 2, **caractérisée par** au moins un moyen d'indication de réglage (17, 34, 41).

4. Unité de commande de fluide (1, 25, 44) selon la revendication 3, **caractérisée en ce que** ledit au moins un moyen d'indication de réglage (17, 34, 41) est conçu au moins en partie comme un moyen d'indication de réglage mécanique (17, 34, 41) et/ou est connecté, de préférence connecté de façon mécanique, au moins en partie et/ou au moins par moments, à au moins une partie dudit au moins un moyen de vanne pilote (5, 26).

5. Unité de commande de fluide (1, 25, 44) selon l'une quelconque des revendications précédentes, **caractérisée en ce que** ledit au moins un moyen de vanne pilote (5, 26) peut être actionné, au moins en partie et/ou au moins par moments, de façon mécanique, fluidique, pneumatique, hydraulique et/ou électrique.

6. Unité de commande de fluide (1, 25, 44) selon l'une quelconque des revendications précédentes, en particulier selon la revendication 5, **caractérisée en ce que** ladite activation dudit au moins un moyen de vanne pilote (5, 26) et/ou dudit au moins un moyen de régulation de fluide (4) est exécutée d'une façon essentiellement binaire.

7. Unité de commande de fluide (1, 25, 44) selon l'une quelconque des revendications précédentes, **caractérisée par** au moins un moyen de poussée de vanne (13, 16), en particulier au moins un moyen de poussée de vanne (13, 16) pour pousser au moins un desdits moyens de régulation de fluide (4) et/ou pour pousser au moins un desdits moyens de vanne pilote (5, 26).

8. Unité de commande de fluide (1, 25, 44) selon l'une quelconque des revendications précédentes, **caractérisée par** au moins un moyen de dérivation de fluide (10), en particulier pour dériver fluidiquement au moins un desdits moyens de régulation de fluide (4) au moins en partie et/ou au moins par moments.

9. Unité de commande de fluide (1, 25, 44) selon l'une quelconque des revendications précédentes, **caractérisée par** au moins une connexion fluidique supplémentaire (24), de préférence audit au moins un port d'entrée de fluide (2), en particulier par au moins un moyen de remplissage (24) et/ou par au moins un moyen de réduction de pression.

10. Unité de commande de fluide (1, 25, 44) selon l'une quelconque des revendications précédentes, **caractérisée par** au moins un dispositif de manipulation d'utilisateur mécanique (19, 30, 41).

11. Unité de commande de fluide (1, 25, 44) selon l'une quelconque des revendications précédentes, comprenant au moins un dispositif de connexion (2, 3, 24, 31, 32, 38), en particulier au moins un dispositif de connexion rapide (38) et/ou au moins un dispositif à filet (31, 32), en particulier au moins un dispositif de connexion pour ledit au moins un port d'entrée de fluide (2) et/ou ledit au moins un port de sortie de fluide (3), dans laquelle ledit au moins un dispositif de connexion est de préférence interchangeable.

12. Unité de commande de fluide (1, 25, 44) selon l'une quelconque des revendications précédentes, **caractérisée en ce qu'**elle est conçue et agencée de telle manière qu'elle puisse être utilisée pour des bouteilles de gaz pressurisées.

13. Unité de commande de fluide (1, 25, 44) selon l'une quelconque des revendications précédentes, **caractérisée en ce qu'**elle est conçue et agencée de telle manière qu'une pression minimum sera maintenue pour au moins un desdits ports d'entrée de fluide (2).

14. Agencement de fourniture de fluide, **caractérisé par** au moins une, et de préférence par une pluralité d'unités de commande de fluide (1, 25, 44) selon l'une quelconque des revendications 1 à 13.

15. Agencement de fluide selon la revendication 14, **caractérisé par** des moyens d'actionnement communs (30, 35, 39) pour actionner au moins un desdits moyens de vanne pilote (5, 26), de préférence pour actionner au moins une pluralité desdits moyens de vanne pilote (5, 26), mieux encore pour actionner essentiellement tous les moyens de vanne pilote (5, 26).
